# EUROPEAN PATENT SPECIFICATION

(11) **EP 2 470 549 B1**
(45) Date of publication and mention of the grant of the patent: **16.07.2014**
(21) Application number: 10739872.9
(22) Date of filing: 29.07.2010
(51) Int. Cl.: C07F 9/38, C07F 9/6506, C07F 9/6561, C07F 9/58

(54) **PROCESS FOR MAKING 1-HYDROXYALKYLIDENE-1,1-BIPHOSPHONIC ACIDS**
VERFAHREN ZUR HERSTELLUNG VON HYDROXYALKYLIDEN-1,1-BIPHOSPHONSÄUREN
PROCÉDÉ DE FABRICATION D'ACIDES 1-HYDROXYALKYLIDÈNE-1,1-BIPHOSPHONIQUES

(30) Priority: 28.08.2009 US 238008 P
(43) Date of publication of application: 04.07.2012
(73) Proprietor: Synthon B.V., 6545 CM Nijmegen (NL)
(72) Inventor: BARTI, Jiri, CZ-664 47 Strelice (CZ)
(74) Representative: van den Broek, Ludovicus A.G.M.
(86) International application number: PCT/EP2010/004766
(87) International publication number: WO 2011/023280

(56) References cited:
- WO-A1-95/06052
- WO-A1-2005/063717
- WO-A1-2006/071128
- WO-A1-2006/134603
- WO-A1-2007/016982
- WO-A1-2010/050830
- WO-A1-2010/060619
- WO-A2-2006/129056
- WO-A2-2010/003704
- US-A- 4 254 063
- US-A- 6 143 923
- US-A1- 2003 013 918
- VON BAEYER ET AL: "Acetodiphosphorige Säure" CHEM. BER., vol. 30, May 1897 (1897-05), - August 1897 (1897-08) pages 1973-1978, XP002617444
- DATABASE Reaxys [Online] Elsevier; 1984, Alfer'ev et al: "Rx-ID: 1941401" XP002617445 Database accession no. Rx-ID: 1941401 & ALFER'EV ET AL: DOKLADY CHEM., vol. 277, 1984, pages 233-236,
- SU GUOQIANG ET AL: "A SYNTHETIC METHOD OF THE BONE RESORPTION INHIBITOR AMINO-BISPHOSPHONATES AND THEIR SODIUM SALTS" ZHONGGUO YAOWU HUAXUE ZAZHI - CHINESE JOURNAL OF MEDICINALCHEMISTRY, GAI-KAI BIANJIBU, SHENYANG, CN, vol. 10, no. 1, 1 March 2000 (2000-03-01), page 49/50, XP009057402 ISSN: 1005-0108
- DATABASE WPI Week 200765 Thomson Scientific, London, GB; AN 2007-691434 XP002617675 & CN 1 948 258 A (ZHOU X) 18 April 2007 (2007-04-18)
- DATABASE WPI Week 200356 Thomson Scientific, London, GB; AN 2003-587996 XP002617676 & CN 1 418 883 A (UNIV FUDAN) 21 May 2003 (2003-05-21)
- DATABASE WPI Week 200929 Thomson Scientific, London, GB; AN 2009-G79765 XP002617677 & CN 101 386 628 A (HENAN QINGSHUIYUAN TECHNOLOGY CO LTD) 18 March 2009 (2009-03-18)
- RAO ET AL: ARKIVOC, vol. (xiv), 2007, pages 34-38, XP002617678
- PI S Q ET AL: "Synthesis of disodium minodronate" ZHONGGUO YIYAO GONGYE ZAZHI - CHINESE JOURNAL OF PHARMACEUTICALS, SHANGHAI YIYAO GONGYE YANJIUYUAN, SHANGHAI, CN, vol. 35, no. 4, 1 January 2004 (2004-01-01), pages 193-194, XP008085963 ISSN: 1001-8255
- DATABASE WPI Week 200565 Thomson Scientific, London, GB; AN 2005-631591 XP002617679 & CN 1 616 469 A (ZHANG Y) 18 May 2005 (2005-05-18)
- DATABASE CA [Online] CHEMICAL ABSTRACTS SERVICE, COLUMBUS, OHIO, US; ZOBACOVA, ALENA ET AL: "Disodium 1-hydroxyethane-1,1-diphosphonate" XP002617680 retrieved from STN Database accession no. 106:67494 & CS 223 270 B1 (CZECH.) 15 September 1983 (1983-09-15)
- MA H-L: "Synthesis of 1-Hydroxyl 1.1- Diphosphoethone (EHDP) and EHDP sodium salt" SHANG QIU SHI FAN XUE YUAN XUE BAO = JOURNAL OF SHANGQIU TEACHERS COLLEGE, XX, CN, vol. 18, no. 5, 1 October 2002 (2002-10-01), pages 81-82, XP008132022 ISSN: 1672-3600

## Description

The present invention relates to processes for making biphosphonic acids using a particular phosphonation agent.

### BACKGROUND OF THE INVENTION

1-hydroxyalkylidene-1,1-biphosphonic acids of the general formula (1) 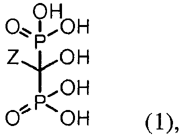 including salts and hydrates thereof, represent an important class of pharmaceuticals, useful for treatment or prevention of osteoporosis. In the general formula (1), the Z represents a methyl group or a substituted methyl group, particularly substituted by a nitrogen-containing substituent. More particularly, the biphosphonic acids listed below have been the subject of considerable research efforts and many of them are marketed as pharmaceutically active compounds in various pharmaceutical compositions, mostly as hydrated sodium salts:

| | |
|---|---|
| etidronic acid | Z = methyl |
| pamidronic acid | Z = 2-aminoethyl |
| alendronic acid | Z = 3-aminopropyl |
| neridronic acid | Z = 5-aminopentyl |
| olpadronic acid | Z = 2-(N,N-dimethylamino)ethyl |
| ibandronic acid | Z = 2-(N-methyl-N-pentylamino)ethyl |
| risedronic acid | Z = pyridin-3-ylmethyl |
| zoledronic acid | Z = 2-imidazol-1-ylmethyl |
| minodronic acid | Z = (imidazo[1,2a]pyridin-2yl)methyl |

In a known general process for making the compounds of formula (1), an acid of the general formula (2)

Z-COOH (2)

is reacted in a solvent (or in a diluent) and at an enhanced temperature with a phosphonation agent and the resulting complex mixture of cyclic pyrophosphonate intermediates (the nature of which has been suggested, e.g., in US 5,510,517) is hydrolyzed by heating the mixture with water or a non-oxidizing aqueous acid to form a biphosphonic acid. The obtained biphosphonic acid is then optionally isolated, or is optionally converted into a corresponding salt and then isolated. The phosphonation agent is typically a mixture of phosphorous acid and a halophosphorous compound (such as phosphorous trichloride PCl₃, phosphorous pentachloride PCl₅, phosphorous oxychloride POCl₃, and the like).

There are many prior art documents dealing with this general process. Many of them relate to problems with the diluent used; i.e., the diluents do not fully dissolve the reaction components (e.g., the compound of formula (2) and/or the phosphonation agent), so that the resulting reaction mixture is a poorly stirred polyphasic mass, the work-up of which is quite complicated. See, e.g., US 4,407,761, wherein the reaction proceeds in chlorobenzene; US 7,038,083, wherein the diluent is an aromatic hydrocarbon; US 2006/0258625, which used diphenyl ether; or WO 2007/083240, which used a phenolic compound as a diluent. Solubilization may be achieved in some cases by using methane sulfonic acid (US 4,922,007 and US 5,019,651), polyalkylene glycols (US 5,908,959, WO 98/34940), triglycerides or alkyl/aralkyl ethoxylates (WO 02/090367), however, these solubilization agents complicate the elaboration of the reaction mixture as well.

In each of the processes cited above, the phosphonation agent comprises a halophosphorous compound and a phosphorous acid. Phosphorous acid (also sometimes called phosphonic acid) of the formula H₃PO₃ is a crystalline material having a melting point of about 70°C, is miscible with water, and has poor handling characteristics because of its hygroscopic and corrosive nature. In practice, it is obtainable with maximum purity of about 97%. The impurities present in this reagent can cause side reactions in the phosphonation process. It was also observed that it readily evolves phosphine gas during the phosphonation reaction; phosphine is corrosive and toxic gas with unpleasant smell. These disadvantages are manifested, in particular, in a large scale production.

Thus, it would be desirable to have an alternative phosphonation agent; especially one that can avoid/omit the use of a phosphorous acid. Su Guoquiang et al in the Chinese Journal of Medicinal Chemistry, March 2000, describes the preparation of ibandronic acid by reacting the corresponding carboxylic acid in chlorobenzene with a mixture of phosphorus trichloride and water.

### SUMMARY OF THE INVENTION

The present invention as defined in claim 1 provides an alternative phosphonation agent based on the combination of a phosphorous halide compound and water. Accordingly, a first aspect of the present invention relates to a process of making a biphosphonate, which comprises reacting in a solvent/diluent a carboxylic acid compound of formula (2) or a salt thereof

Z - COOH (2),

wherein Z represents a C1-C6 alkyl group optionally substituted by an amino group, one or two C1-C6 alkylamino group(s), or a nitrogen-containing heterocyclic group, with a phosphonation agent to form cyclic pyrophosphonate intermediates, wherein the phosphonation agent is a combination of a phosphorous halide compound and water; and hydrolyzing the cyclic pyrophosphonate intermediates to form a compound of formula (1) or a salt or hydrate thereof 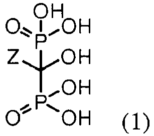 wherein Z is as defined above. Typically, the phosphorus halide compound is phosphorous trichloride, phosphoric oxychloride and/or phosphoric pentachloride, most preferably phosphorous trichloride. The molar ratio between the phosphorus halide compound and water is generally from 1:0.3 to 1:1.6, and typically about 1:1.

The solvent/diluent contains a at least one of a hydrocarbon, an ether, an alcohol, a polyol and/or a compound of the formula (3) 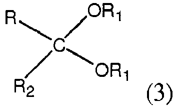 wherein R is hydrogen or a C1-C6 alkyl group; each of R1 is a C1-C6 alkyl group or both R1 groups are linked to form a C1-C3 alkylene group; and R2 is hydrogen, a C1-C6 alkyl group, a C1-C6 alkoxy group, or is linked together with R to form a C3-C7 carbon ring. Generally the compound of formula (3) is an acetal (R2= H), a ketal (R2= C1-C6 alkyl or a C3-C7 ring together with R) or an ortho-ester (R2 = O-R1). Preferably, the compound of formula (3) is a C1-C6 dialkyl acetal of formaldehyde (R=R2 = H, R1=C1-C6 alkyl group), and more preferably is formaldehyde diethyl acetal CH₂(OC₂H₅)₂. The hydrolyzing step usually comprises contacting the cyclic pyrophosphonate intermediates with water, alcohol, or a mixture thereof. The process typically further comprises isolating the compound of formula (1) or a salt or hydrate thereof, such as by precipitation.

Another aspect of the invention relates to an improvement in the process of making biphosphonate compounds by reacting an acid or ester with a phosphonation agent and hydrolyzing the reaction product, the improvement for which comprises using a combination of a phosphorous halide compound and water as the phosphonation agent.

### DETAILED DESCRIPTION OF THE INVENTION

The present invention as defined in claim 1 relates to the discovery of a useful phosphonation agent in synthesizing biphosphonate compounds such as the compounds of formula (1) 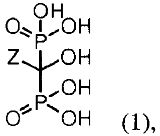 wherein Z is C1-C6 alkyl group optionally substituted by: an amino group, one or two C1-C6 alkylamino group(s), or a nitrogen-containing heterocyclic group (pyridinyl. imidazolyl, benzimidazolyl, imidazopyridinyl). The synthesize comprises reacting an acid of formula (2)

Z - COOH (2),

wherein Z is as defined above, with a phosphonation agent that comprises a combination of a phosphorous halide compound and water. Phosphorous acid is not needed and is preferably excluded from the phosphonation agent of the invention. The replacement of the corrosive and hygroscopic phosphorous acid with water provides economic and ecologic advantages. Furthermore, in some embodiments, the product exhibits higher purity and sometimes even a higher production yield than the classical phosphonation agent employing phosphorous acid. By conducting the reaction in a suitable solvent/diluent system, the reaction mixture can remain an easily stirrable fluid, particularly a solution. In general, the reaction is less exothermic than when using the phosphorous acid. As a result, good control of the reaction and easy upscaling are possible.

The phosphonation agent of the present invention comprises a combination of a phosphorous halide compound and water. This "combination" is intended to embrace simple mixtures as well as complexes and/or reaction products of the phosphorous halide compound and water. The phosphorus halide compound is a halide of tri- or pentavalent phosphorus, including phosphorous trichloride, phosphoric pentachloride , phosphoric oxychloride and/or mixtures thereof. Typically the phosphorous halide compound is phosphorous trichloride (PCl₃). The molar ratio between the phosphorus halide and water is generally from 1:0.3 to 1:1.6. Although higher or lower molar ratios are operable, the chance of lower yields of the product and/or difficultly in stirring the reaction mixture are increased. Usually a molar ratio of the phosphorus halide to water of about 1:1 is preferred; e.g., +/- 10% of equimolar amounts of phosphorus halide and water.

The phosphonation agent of the present invention is generally made by carefully dropping the desired amount of water into the stirred phosphorus halide. Care is to be taken in that hydrogen gas can be evolved in the combining step and appropriate safety precautions should be considered. The temperature of the contacting is generally ambient; the reaction is slightly exothermic. The produced phosphonation agent may be prepared in advance (which is also an advantage of the present invention) and stored for later usage; i.e., stored for 1 to 7 days. Advantageously, however, it is used immediately in the phosphonation reaction.

It should be noted that the amount of water used for making the phosphonation agent may take into account the amount of water, if any, contained in the compound of formula (2) and/or in the solvent/diluent used for the phosphonation reaction. That is, additional water can be added to the phosphonation agent via the solvent/diluent or the compound of formula (2) in order to achieve the intended or desired molar ratio of phosphorous halide compound and water in the phosphonation agent.

The solvent/diluent system in the phosphonation reaction is a liquid inert to the phosphorus halide or the compound (2) and can dissolve or dilute the reagents and the product of the phosphonation reaction. Preferably, the solvent/diluent yields a sufficiently stirrable reaction mixture, such as any of the proposed discussed above. Particularly the solvent/diluent of the invention comprises at least one of a hydrocarbon, an ether (including a cyclic ether), an alcohol, a polyol (an alkylene glycol incl. a polyalkylene glycol), a carbonate (incl. a cyclic carbonate) and/or a compound of the formula (3) 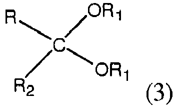 wherein R is hydrogen or a C1-C6 alkyl group; each of R1 is a C1-C6 alkyl group or both R1 groups are linked to form a C1-C3 alkylene group; and R2 is hydrogen, a C1-C6 alkyl group, a C1-C6 alkoxy group, or is linked together with R to form a C3-C7 carbon ring.

A compound of formula (3) is a preferred solvent/diluent either alone with one of the above-mentioned solvents such as an aromatic hydrocarbon or a polyalkyleneglycol. Typically, the solvent/ diluent of formula (3) is chemically an acetal (R2= H), a ketal (R2= alkyl group or a C3-C7 ring together with R) or an ortho-ester (R2 = O-R1); preferably a C1-C6 dialkyl acetal of formaldehyde (R=R2 = H, R1=C1-C6 alkyl group). Examples of suitable solvents/diluents of the formula (3) include formaldehyde diethyl acetal (ethylal), dibutoxymethane (butylal), 1,3-dioxolan, propionaldehyde diethyl acetal, trimethyl orthoformate, and triethylorthoacetate. A preferred solvent/diluent of the formula (3) is formaldehyde diethyl acetal which can be represented as CH₂(OC₂H₅)₂.

In a preferred mode, group Z in the acid of the formula (2) is the same as the group Z in the resulting biphosphonate. The acid (2) may be used in the process of the present invention also as a metal salt, e.g., sodium salt; any of the acids (2) that comprises a nitrogen-containing group Z may be used in the form of an acid addition salt thereof, e.g., as a hydrochloride. The compound (2) may also be used in its ester form.

More specifically, the groups Z in the compounds (1) and (2) are a C1-C6 alkyl group optionally substituted by an amino group, one or two C1-C6 alkylamino group(s), or a nitrogen-containing heterocyclic group (pyridinyl. imidazolyl, benzimidazolyl, imidazopyridinyl). The groups Z in the compounds (1) and (2) are typically represented by methyl, 2-aminoethyl, 3-aminopropyl, 5-aminopentyl, 2-(N,N-dimethylamino)ethyl, 2-(N-methyl-N-pentylamino)ethyl, pyridin-3-ylmethyl, 2-imidazol-1-ylmethyl, or (imidazo[1,2a]pyridin-2-yl)methyl, and include also precursors of these groups.

The acids of the formula (2) are obtainable by methods known in the art or are commercially available.

The reaction between the compound of the formula (2) defined above and the phosphonation agent in the solvent/diluent in the process of the present invention preferably proceeds at a temperature of about 40°C to 80°C, more preferably at 50-65°C. The phosphonation agent is typically used in molar excess of the acid of formula (2), using the molar amount of phosphorous halide compound used for the preparation of the phosphonation agent as the molar amount phosphonation agent. Accordingly, the molar ratio of the phosphorous halide compound to the acid of the formula (2) is advantageously from 3:1 to 10:1.

The solvent/diluent may be used in amount, which is advantageously 2 to 10 volumes based on weight of the acid of the formula (2) (2-10 ml/mg).

After the completion of the phosphonation reaction (i.e., the reaction in the solvent/diluent of the compound (2) and the phosphonation agent), which may be monitored by a suitable analytical technique, e.g., a TLC or HPLC, the reaction mixture (or, alternatively, the isolated mixture of cyclic pyrophosphonate intermediates) is subjected to a hydrolytic and/or solvolytic reaction by contacting the reaction mixture with water and/or an alcohol. In this reaction, various reagents, particularly the halophosphorous compounds, and if present preferably also the compound of the formula (3), are decomposed as well. Advantageously, the above mixture of intermediates is treated by water, preferably at an enhanced temperature (advantageously higher than 60°C including reflux temperature) and for a prolonged time (e.g., for at least 4 hours and preferably for at least 10 hours). A homogeneous organic/aqueous mixture is generally formed after the hydrolysis, wherein the product of the formula (1) stays dissolved in the mixture. Alternatively, the reaction mixture is solvolyzed by an alcohol. Here, the volatile components are removed by evaporation and the reaction remainder is treated with water to hydrolyze the so-formed esters of the compounds of the formula (1) to the desired acid. The reaction mixture may also be treated with a mixture of water and alcohol.

The acid of the formula (1) may be isolated from the reaction mixture after hydrolysis in solid state by a suitable precipitation process. Advantageously, the reaction mixture, or if biphasic, the aqueous phase thereof, is neutralized and/or alkalinized by a molar equivalent or a slight molar excess of an alkali (e.g., sodium/potassium hydroxide or carbonate) to a pH of between 4 and 5, preferably between 4.2 and 4.5. The biphosphonic acid (1) is isolated from the aqueous phase as a solid monovalent alkali metal (monosodium or monopotassium) salt by precipitation thereof after adding a water miscible organic liquid (an antisolvent) such as an aliphatic alcohol in which the salt is less soluble. Preferably the amount of the antisolvent is about 0.8 to 2 volume equivalents to the volume of the water; higher amount of the antisolvent may cause co-precipitation of inorganic alkali metal salts as well, although these co-precipitated salts may be removed later in a purification step. The precipitated solid product is filtered from the liquid medium, washed and optionally dried. Under the above conditions, the monovalent alkali metal salts of the acids of formula (1) may be typically isolated in hydrated forms, which are preferably crystalline.

If necessary and/or desirable, the isolated crude product is then purified by a suitable process, e.g., by a recrystallization or by an extraction. It may be also converted into another acid/salt/ester form, including any of its hydrated or solvated forms.

The invention will be further described with reference to the following nonlimiting examples.

### EXAMPLES

### Example 1 Sodium ibandronate

65 g water (3.624 mmol) was added dropwise into 497.7 g (3.624 mmol) of PCl₃ at 20-30°C during 30 minutes and the mixture was stirred at 25-30 °C for 30 minutes. Then the mixture was heated to 40° C and 100 g (0.477 mmol) of (3-methyl-pentyl-amino)propionic acid hydrochloride and 124.5 g of ethylal were added. The reaction mixture was stirred at 57-62°C for 1.5 hours.

Then 800 ml of water was added dropwise at a temperature below 70°C (exothermic reaction). The mixture was stirred at 80-85°C for 10 hours. The solution was cooled to room temperature and alkalinized by 50% solution of NaOH (321 g) at a temperature below 30°C until pH 4.2-4.5. The solution was diluted with 1010 ml of ethanol and stirred for 20 minutes. White crystalline suspension was agitated for 2 hours at room temperature, the solid was filtered and washed with 2x 311 ml of ethanol-water (1:1) mixture and with 311 ml of ethanol. The product was dried at 50°C. Yield: 139.7 g (81.5%) of the sodium ibandronate monohydrate.

### Example 2 Sodium ibandronate

The below procedure was repeated using various Solvents :
Toluene
Tetrahydrofurane
Propylenecarbonate
2-methyltetrahydrofurane
Cyclopentylmethylether

2 ml of water was dropped into 9.5 ml of PCl₃ under stirring at 20-30C during 30 minutes. The mixture was stirred at 28-30° C for 30 minutes. Then it was heated to 40°C and 3.0 g of (3-methyl-pentyl-amino)propionic acid hydrochloride and 4.5 ml of the Solvent were added. The mixture was stirred for 1.5 hrs at 60-63°C. Then 24 ml of water was dropped at below 72 °C and the obtained solution was agitated at 80-82 °C for 19 hours. The reaction mixture was cooled and neutralized with 50% aqueous solution of NaOH to pH 4.2-4.5 at below 30° C. Then 33.6 ml of ethanol was added and the crystalline suspension was stirred for 2 hours at room temperature. The solid was filtered off, washed with 2x 9.3 ml of ethanol-water (1:1) mixture and 9.3 ml of ethanol and dried. The product was analysed by HPLC.

### Results :

| Solvent/Diluent | Yield | Purity |
|---|---|---|
| Toluene | 82,1 % | 99.7 % |
| Tetrahydrofurane | 67.6 % | 99.7 % |
| Propylene carbonate | 85.4 % | 99.7 % |
| 2-methyltetrahydrofurane | 67.5 % | 98.9 % |
| Cyclopentylmethyl ether | 67.5 % | 100.0 % |

## Claims

1. A process of making a biphosphonate, which comprises:
reacting in a solvent/diluent a carboxylic acid compound of formula (2) or a salt thereof
Z - COOH (2),
wherein Z represents a C1-C6 alkyl group optionally substituted by an amino group, one or two C1-C6 alkylamino group(s), or a nitrogen-containing heterocyclic group, with a phosphonation agent to form cyclic pyrophosphonate intermediates, wherein said phosphonation agent is a combination of a halophosphorous compound and water; and
hydrolyzing said cyclic pyrophosphonate intermediates to form a compound of formula (1) or a salt or hydrate thereof 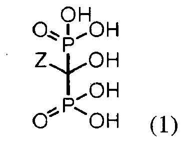 wherein Z is as defined above,
wherein said solvent/diluent comprises at least one of a hydrocarbon, an ether, an alcohol, a polyol, a carbonate and/or a compound of the formula (3) 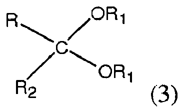 wherein R is hydrogen or a C1-C6 alkyl group; each of R1 is a C1-C6 alkyl group or both R1 groups are linked to form a C1-C3 alkylene group; and R2 is hydrogen, a C1-C6 alkyl group, a C1-C6 alkoxy group, or is linked together with R to form a C3-C7 carbon ring.

2. The process according to claim 1, wherein Z is selected from the group consisting of methyl, 2-aminoethyl, 3-aminopropyl, 5-aminopentyl, 2-(N,N-dimethylamino)ethyl, 2-(N-methyl-N-pentylamino)ethyl, pyridin-3-ylmethyl, 2-imidazol-1-ylmethyl, and (imidazo[1,2a]pyridin-2-yl)methyl; and preferably is 2-(N-methyl-N-pentylamino)ethyl.

3. The process according to claims 1 and 2, wherein said halophosphorous compound is selected from the group consisting of phosphorous trichloride PCl₃, phosphorous pentachloride PCl₅, and phosphorous oxychloride POCl₃; and preferably is phosphorous trichloride.

4. The process according to claims 1-3, wherein the molar ratio of phosphorus halide compound to water is from 1:0.3 to 1:1.6, respectively, and preferably about 1:1.

5. The process according to claims 1-4, wherein said halophosphorous compound is present in a molar excess relative to said compound of formula (2) and typically is used in a molar ratio of halophosphorous compound to compound of formula (2) within the range of 3:1 to 10:1.

6. The process according to claim 1, wherein R2 in the compound of formula (3) is hydrogen.

7. The process according to claim 6, wherein R and R2 are hydrogen and R1 represents a C1-C6 alkyl group.

8. The process according to claims 1-7, wherein said solvent/diluent comprises formaldehyde diethyl acetal.

9. The process according to claims 1-8, wherein said solvent/diluent is used in an amount of 2 to 10 volumes based on the weight of the compound of formula (2).

10. The process according to claims 1-9, wherein said hydrolyzing step comprises contacting, under reactive conditions, said cyclic pyrophosphonate intermediates with water, alcohol, or a mixture thereof.

11. The process according to claim 10, which further comprises isolating said compound of formula (1) or a salt or hydrate thereof from the reaction mixture by precipitation.

## Patentansprüche

1. Verfahren zum Herstellen eines Biphosphonats, das umfasst:
Umsetzen einer Carbonsäureverbindung der Formel (2) oder eines Salzes davon in einem Lösungsmittel/Verdünnungsmittel
Z - COOH (2),
wobei Z eine C1-C6-Alkylgruppe, gegebenenfalls substituiert mit einer Aminogruppe,
einer oder zwei C1-C6 Alkylaminogruppe(n), oder einer stickstoffhaltigen heterozyklischen Gruppe, darstellt, mit einem Phosphonierungsmittel, um zyklische Pyrophosphonatintermediate zu erhalten, wobei das Phosphonierungsmittel eine Kombination einer Phosphorhalogenverbindung und Wasser ist; und
Hydrolysieren der zyklischen Pyrophosphonatintermediate, um eine Verbindung der Formel (1) oder ein Salz oder Hydrat davon zu bilden 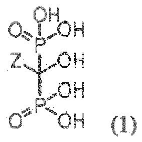 wobei Z wie vorstehend definiert ist,
wobei das Lösungsmittel/Verdünnungsmittel mindestens einen eines Kohlenwasserstoffs, eines Ethers, eines Alkohols, eines Polyols, eines Carbonats und/oder einer Verbindung der Formel (3) umfasst 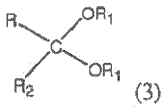 wobei R Wasserstoff oder eine C1-C6-Alkylgruppe ist; jeder von R1 eine C1-C6 Alkylgruppe ist, oder beide R1-Gruppen verbunden sind, um eine C1-C3-Alkylengruppe zu bilden; und R2 Wasserstoff, eine C1-C6-Alkylgruppe, eine C1-C6-Alkoxygruppe ist, oder zusammen mit R verbunden ist, um einen C3-C7-Kohlenstoffring zu bilden.

2. Verfahren nach Anspruch 1, wobei Z ausgewählt ist aus der Gruppe bestehend aus Methyl, 2-Aminoethyl, 3-Aminopropyl, 5-Aminopentyl, 2-(N,N-dimethylamino)ethyl, 2-(N-methyl-N-pentylamino)ethyl, Pyridin-3-ylmethyl, 2-Imidazol-1-ylmethyl, und (Imidazo[1,2a]pyridin-2-yl)methyl; und bevorzugt 2-(N-methyl-,-N-pentylamino)ethyl ist.

3. Verfahren nach Ansprüchen 1 oder 2, wobei die Phosphorhalogenverbindung ausgewählt ist aus der Gruppe bestehend aus Phosphortrichlorid PCl₃, Phosphorpentachlorid PCl₅, und Phosphoroxychlorid POCl₃; und bevorzugt Phosphortrichlorid ist.

4. Verfahren nach Ansprüchen 1-3, wobei das molare Verhältnis von Phosphorhalogenverbindung zu Wasser jeweils von 1:0,3 bis 1:1,6, und bevorzugt etwa 1:1 ist.

5. Verfahren nach Ansprüchen 1-4, wobei die Phosphorhalogenverbindung in einem mo laren Überschuss bezogen auf die Verbindung der Formel (2) vorliegt, und typischerweise in einem molaren Verhältnis von Phosphorhalogenverbindung zu Verbindung der Formel (2) innerhalb des Bereichs von 3:1 zu 10:1 verwendet wird.

6. Verfahren nach Anspruch 1, wobei R2 in der Verbindung der Formel (3) Wasserstoff ist.

7. Verfahren nach Anspruch 6, wobei R und R2 Wasserstoff sind, und R1 eine C1-C6-Alkylgruppe darstellt.

8. Verfahren nach den Ansprüchen 1-7, wobei das Lösungsmittel/Verdünnungsmittel Formaldehyddiethylacetal umfasst.

9. Verfahren nach den Ansprüchen 1-8, wobei das Lösungsmittel/Verdünnungsmittel in einer Menge von 2 bis 10 Volumina basierend auf dem Gewicht der Verbindung der Formel (2) verwendet wird.

10. Verfahren nach den Ansprüchen 1-9, wobei der Hydrolysierungsschritt Inkontaktbringen des zyklischen Pyrophosphonatintermediats mit Wasser, Alkohol, oder einer Mischung davon unter reaktiven Bedingungen umfasst.

11. Verfahren nach Anspruch 10, das weiterhin Isolieren der Verbindung der Formel (1) oder eines Salzes oder Hydrats davon aus der Reaktionsmischung durch Fällung umfasst.

## Revendications

1. Un procédé de fabrication d'un biphosphonate, qui comprend:
- la réaction dans un solvant/diluant d'un composé acide carboxylique de formule (2) ou d'un sel dérivant d'un tel acide de formule (2):
Z - COOH (2),
dans laquelle Z représente un groupe alkyle en C₁-C₆, éventuellement substitué par un groupe amino, un ou deux groupes C₁-C₆ alkylamino(s), ou un groupe hétérocyclique contenant de l'azote,
avec un agent de phosphonation pour former des intermédiaires pyrophosphonates cycliques, où ledit agent de phosphonation est une combinaison d'un composé halophosphoreux et d'eau; et
- l'hydrolyse desdits intermédiaires pyrophosphonates cycliques pour former un composé de formule (1) ou un sel ou hydrate de ce composé de formule (1): 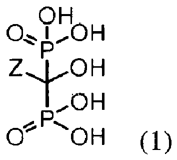 dans laquelle Z est tel que défini ci-dessus,
procédé dans lequel ledit solvant/diluant comprend au moins un hydrocarbure, un éther, un alcool, un polyol, un carbonate, et/ou un composé de formule (3) 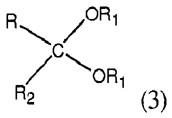 dans laquelle
- R est un atome d'hydrogène ou un groupe alkyle en C₁-C₆;
- chacun des R₁ est un groupe alkyle en C₁-C₆, ou bien les deux groupes R₁ sont liés pour former un groupe alkylène en C₁-C₃ et
- R₂ est un atome d'hydrogène, un groupe alkyle en C₁-C₆, un groupe alcoxy en C₁-C₆, ou est lié à R pour former un cycle carboné en C₃ à C₇.

2. Le procédé selon la revendication 1, dans lequel Z est choisi dans le groupe consistant en des radicaux méthyle, 2-aminoéthyle, 3-aminopropyle, 5-aminopentyle, le 2-(N,N-diméthylamino)-éthyle, 2-(N-méthyl-N-pentylamino)-éthyle, pyridin-3-yl-méthyle, 2-imidazol-1-yl-méthyle et (imidazo-[1, 2a]-pyridine-2-yl)-méthyle; et est de préférence le 2-(N-méthyl-N-pentylamino)-éthyle.

3. Le procédé selon les revendications 1 et 2, dans lequel ledit composé halophosphoreux est choisi dans le groupe consistant en le trichlorure phosphoreux PCl₃, le pentachlorure phosphoreux PCl₅ et l'oxychlorure phosphoreux POCl₃; et est de préférence le trichlorure phosphoreux.

4. Le procédé selon les revendications 1-3, dans lequel le rapport molaire composé halophosphoreux/eau est de 1/0,3 à 1/1,6, respectivement, et de préférence d'environ 1/1.

5. Le procédé selon les revendications 1 à 4, dans lequel ledit composé halophosphoreux est présent en un excès molaire par rapport audit composé de formule (2) et est utilisé généralement dans un rapport molaire composé halophosphoreux/composé de formule (2) dans la gamme de 3/1 à 10/1.

6. Le procédé selon la revendication 1, dans lequel R₂ dans le composé de formule (3) est l'hydrogène.

7. Le procédé selon la revendication 6, dans lequel R et R₂ sont des atomes d'hydrogène et R₁ représente un groupe alkyle en C₁-C₆.

8. Le procédé selon les revendications 1-7, dans lequel ledit solvant/diluant comprend du formaldéhyde-diéthylacétal.

9. Le procédé selon les revendications 1-8, dans lequel ledit solvant/diluant est utilisé en une quantité de 2 à 10 volumes par rapport au poids du composé de formule (2).

10. Le procédé selon la revendication 1-9, dans lequel ladite étape d'hydrolyse comprend la mise en contact, dans des conditions réactives, desdits intermédiaires pyrophosphonates cycliques avec de l'eau, de l'alcool ou un mélange de ceux-ci.

11. Le procédé selon la revendication 10, qui comprend en outre l'isolement dudit composé de formule (1) ou d'un sel ou hydrate en dérivant du mélange réactionnel par précipitation.
